# EUROPEAN PATENT SPECIFICATION

(11) **EP 3 761 590 B1**
(45) Date of publication and mention of the grant of the patent: **28.06.2023**
(21) Application number: 19774591.2
(22) Date of filing: 26.03.2019
(51) Int. Cl.: H04W 12/08, H04W 48/08, H04W 48/16, H04L 67/12, H04W 48/02

(54) **METHOD FOR CONTROLLING TERMINAL TO ACCESS NETWORK, AND NETWORK ELEMENT**
VERFAHREN ZUR STEUERUNG EINES ENDGERÄTS FÜR DEN ZUGRIFF AUF EIN NETZWERK UND NETZWERKELEMENT
PROCÉDÉ DE COMMANDE DE TERMINAL EN VUE DE SON ACCÈS À UN RÉSEAU, ET ÉLÉMENT DE RÉSEAU

(30) Priority: 28.03.2018 CN 201810264955
(43) Date of publication of application: 06.01.2021
(73) Proprietor: HUAWEI TECHNOLOGIES CO., LTD., Shenzhen, Guangdong 518129 (CN)
(72) Inventor: HU, Li, Shenzhen, Guangdong 518129 (CN); WU, Yizhuang, Shenzhen, Guangdong 518129 (CN); LU, Wei, Shenzhen, Guangdong 518129 (CN); CHEN, Jing, Shenzhen, Guangdong 518129 (CN); WANG, Yong, Shenzhen, Guangdong 518129 (CN)
(74) Representative: Pfenning, Meinig & Partner mbB
(86) International application number: PCT/CN2019/079631
(87) International publication number: WO 2019/184900

(56) References cited:
- CN-A- 102 056 169
- US-A1- 2011 314 542
- US-A1- 2011 314 542
- US-A1- 2011 314 542
- US-B1- 8 006 285

## Description

### TECHNICAL FIELD

Embodiments of this application relate to the field of communications technologies, and in particular, to a method for controlling access of a terminal to a network and a network element.

### BACKGROUND

A fifth generation (5th generation, 5G) system is mainly used in three service scenarios, and one of the three service scenarios is an enhanced machine type communication (enhanced machine type communication, eMTC) service. The eMTC service is mainly provided for internet of things (Internet of Things, IoT) devices. Usually, the IoT devices are easy to implement and are provided with poor security protection. Therefore, how to control security when the IoT devices access networks is an urgent problem currently to be resolved.

In a fourth generation (4th generation, 4G) system, the following manner is used to control access of a terminal to a network: An administrator configures an access-allowed list and/or an access-forbidden list in a home subscriber server (home subscriber server, HSS) by using a network management device. The access-allowed list includes a device identifier of a terminal allowed to access the network (for example, a subscriber permanent identifier (subscriber permanent identifier, SUPI)), and the access-forbidden list includes a device identifier of a terminal forbidden to access the network. The HSS allows or forbids a terminal to access the network based on the foregoing lists.

If an IoT device in the 5G system is controlled in a manner in the 4G system, flexibility is poor.

The following references are provided:
Document US 2011/314542 A1 provides a method of remotely treating malicious mobile terminals connected to a mobile communications network.
Document US 8 006 285 B1 discusses means for dynamic defense of network attacks.

### SUMMARY

This application provides a method for controlling access of a terminal to a network and a network element, to improve flexibility of controlling access of a terminal to a network.

The invention is disclosed by the independent claims. Further embodiments are described by the dependent claims.

### BRIEF DESCRIPTION OF DRAWINGS

FIG. 1A is a schematic diagram of a possible application scenario according to an embodiment of this application;
FIG. 1B is a schematic diagram of a possible network architecture according to an embodiment of this application;
FIG. 2 is a schematic communication diagram of a method for controlling access of a terminal to a network according to an embodiment of this application;
FIG. 3 is a schematic communication diagram of another method for controlling access of a terminal to a network according to an embodiment of this application;
FIG. 4 is a schematic communication diagram of another method for controlling access of a terminal to a network according to an embodiment of this application;
FIG. 5A is a schematic block diagram of a security function network element according to an embodiment of this application;
FIG. 5B is a schematic structural diagram of a security function network element according to an embodiment of this application;
FIG. 6A is a schematic block diagram of a storage function network element according to an embodiment of this application; and
FIG. 6B is a schematic structural diagram of a storage function network element according to an embodiment of this application.

### DESCRIPTION OF EMBODIMENTS

The following further describes in detail the embodiments of this application with reference to accompanying drawings.

A network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that as the network architecture evolves and a new service scenario emerges, the technical solutions provided in the embodiments of this application are also applicable to similar technical problems.

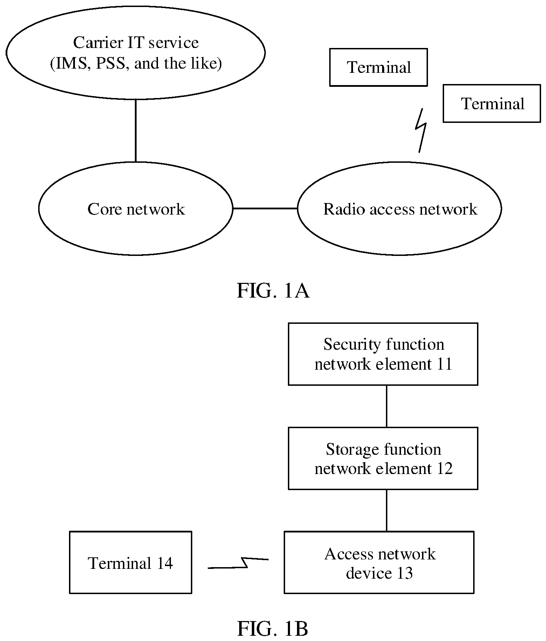

The following first describes some possible network architectures and application scenarios in the embodiments of this application with reference to FIG. 1A and FIG. 1B.

FIG. 1A shows an application scenario to which the embodiments of this application may be applicable. As shown in FIG. 1A, a terminal accesses an operator internet protocol (internet protocol, IP) service network, for example, a multimedia subsystem (IP multimedia system, IMS) network or a packet switched streaming service (packet switched streaming service, PSS) network, by using a radio access network and a core network. The technical solutions described in this application may be applicable to a long term evolution (long term evolution, LTE) system (also referred to as a "4G system") or another wireless communications system that uses various wireless access technologies, for example, a system using an access technology such as code division multiple access (code division multiple access, CDMA), frequency division multiple access (frequency division multiple access, FDMA), time division multiple access (time division multiple access, TDMA), orthogonal frequency division multiple access (orthogonal frequency division multiple access, OFDMA), or a single carrier frequency division multiple access (single carrier frequency division multiple access, SC-FDMA). In addition, the technical solutions may be further applicable to a subsequent evolved system of the LTE system, for example, a 5G system or another system that may appear in the future. The LTE system is used as an example. An evolved universal terrestrial radio access network (evolved universal terrestrial radio access network, E-UTRAN) is used as a radio access network, and an evolved packet core (evolved packet core, EPC) is used as a core network. The terminal accesses an IMS network by using the E-UTRAN and the EPC.

Based on the foregoing application scenario, FIG. 1B shows a possible network architecture according to the embodiments of this application. As shown in FIG. 1B, the network architecture includes a security function network element 11 and a storage function network element 12.

The security function network element 11 is a function network element configured to detect whether a terminal is exposed to a security threat. In the embodiments of this application, the security threat may be that the terminal is controlled by an attacker by using virus software, to form a botnet controlled by the attacker. The attacker may control the terminal in the foregoing botnet to simultaneously initiate a large quantity of requests to a server, so that the server is overloaded and breaks down, thereby causing a denial of service (denial of service, DoS) attack. When the network architecture shown in FIG. 1B is a network architecture of a 5G system, the security function network element 11 may be a network data analysis function (network data analysis function, NWDAF) entity, or may be an application function (application function, AF) entity. The NWDAF entity is configured to provide a big data analysis service. The entity may collect data from a third generation partnership project (third generation partnership project, 3GPP) network, and perform big data analysis, to provide a better policy. The AF entity is configured to provide an application service. The application service may be provided by a third party, or may be provided by an operator. For another example, when the network architecture shown in FIG. 1B is a network architecture of an LTE system, the security function network element 11 may be an application server (application server, AS). A function of the AS is similar to the AF entity in the 5G system.

The storage function network element 12 is a function network element configured to control whether the terminal is allowed to access a network. For example, when the network architecture shown in FIG. 1B is the network architecture of the 5G system, the storage function network element 12 may be a unified data management (unified data management, UDM) entity. The UDM entity is configured to manage subscription information of a user, and complete user authentication and authorization. For another example, when the network architecture shown in FIG. 1B is the network architecture of the LTE system, the storage function network element 12 may be an HSS. A function of the HSS is similar to the UDM entity in the 5G system.

There is a communication connection between the security function network element 11 and the storage function network element 12, and the communication connection may be established in a wired or wireless manner.

Optionally, the security function network element 11 and the storage function network element 12 are devices in a core network of a communications system. As shown in FIG. 1B, the network architecture further includes an access network device 13 and a terminal 14.

The access network device 13 may be a base station (base station, BS), and the base station is an apparatus that is deployed in a radio access network and that is configured to provide a wireless communication function for the terminal 14. The base station may include a macro base station, a micro base station, a relay station, an access point, and the like in various forms. In a system using different radio access technologies, names of devices having a base station function may vary. For example, a device is referred to as a gNB in a 5G system, is referred to as an evolved NodeB (evolved NodeB, eNB or eNodeB) in an LTE system, and is referred to as a NodeB (Node B) in a 3G communications system. For ease of description, in the embodiments of this application, the foregoing devices that provide a wireless communications function for the terminal 14 are collectively referred to as an access network device.

The terminal 14 may include various IoT devices, handheld devices, wearable devices, and computing devices having a wireless communication function, or other processing devices connected to a wireless modem, and various forms of user equipment (user equipment, UE), a mobile station (mobile station, MS), a terminal device (terminal device), or the like. Optionally, the IoT device may include a smart home device (such as a smart switch, a smart speaker, or a smart camera), a vehicle-mounted device, a smart metering device (such as a smart meter or a smart water meter), and the like. For ease of description, the devices mentioned above are collectively referred to as a terminal.

The access network device 13 and the terminal 14 communicate with each other by using an air interface technology, for example, may communicate with each other by using a cellular technology. In addition, there is also a communication connection between the access network device 13 and the storage function network element 12, and the access network device 13 and the storage function network element 12 communicate with each other by using the communication connection.

In the embodiments of this application, nouns "network" and "system" are usually interchangeably used, but meanings of the nouns may be understood by a person skilled in the art. It should be noted that when the solutions in the embodiments of this application are applied to a 5G system or another communications system that may appear in the future. Names of the security function network element, the storage function network element, the access network device, the terminal, and the like may change. However, this does not affect implementation of the solutions in the embodiments of this application.

As described in the background, if a manner in a 4G system is used to control an IoT device in a 5G system, flexibility of the manner is poor. In view of this, the embodiments of this application provide a method for controlling access of a terminal to a network; and a network element and a system that are based on the method. The method is applied to the communications system described above. In the solutions provided in the embodiments of this application, the security function network element outputs an allowed or forbidden indication to the storage function network element 12 by using an automatic processing logic of the security function network element 11, and the storage function network element 12 controls, based on the foregoing indication, the terminal 14 to access the network. This is more flexible, real-time, and automated than a manual configuration mode of an administrator.

The following further describes the embodiments of this application in detail based on a common aspect of the embodiments of this application described above.

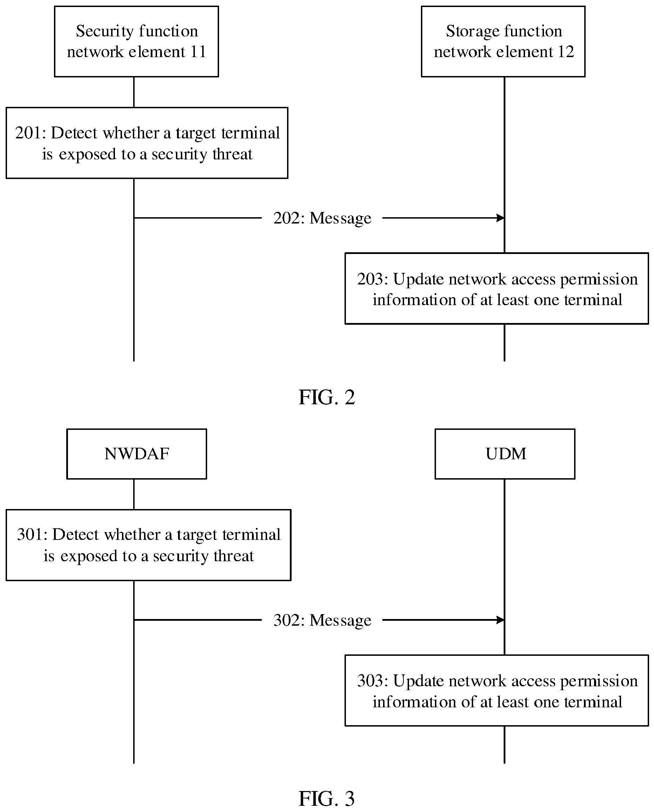

FIG. 2 is a schematic communication diagram of a method for controlling access of a terminal to a network according to an embodiment of this application. The method may include the following parts 201 to 203.

Part 201: A security function network element 11 detects whether a target terminal is exposed to a security threat.

The target terminal may be any terminal 14. For example, as shown in FIG. 1B, the target terminal is represented by a reference numeral 141. In this embodiment of this application, an example in which the security function network element 11 detects only whether the target terminal 141 is exposed to a security threat is used for description. For a manner in which the security function network element 11 detects whether any terminal 14 is exposed to a security threat, refer to the manner in which the security function network element 11 detects whether the target terminal 141 is exposed to a security threat.

In an example, the security function network element 11 obtains information about user plane data of the target terminal 141, and the security function network element 11 determines, based on the information, whether the target terminal 141 is exposed to a security threat. For example, the foregoing information may be a traffic characteristic, for example, a traffic value in a unit time, a traffic value in a fixed time period, and a time period during which a traffic peak and/or a traffic valley is generated. The security function network element 11 may obtain the user plane data of the target terminal 141, and then extract the information about the user plane data. Alternatively, the security function network element 11 may directly obtain the information about the user plane data of the target terminal 141. For example, the security function network element 11 obtains the user plane data of the target terminal 141 from an access network device or a user plane function (user plane function, UPF) entity, and then extracts the information about the user plane data. Alternatively, an access network device or a UPF entity extracts the information about the user plane data of the target terminal 141, and provides the information for the security function network element 11.

Part 202: The security function network element 11 sends a message to a storage function network element 12 based on a detection result.

Specifically, the message includes device information and network access indication information. The device information is used to indicate at least one terminal including the target terminal 141, and the network access indication information is used to instruct to allow or forbid the at least one terminal to access a network. Optionally, the network access indication information is first network access indication information or second network access indication information. The first network access indication information is used to instruct to allow the at least one terminal to access the network, and the second network access indication information is used to instruct to forbid the at least one terminal to access the network.

In an example, the device information includes a device identifier of the target terminal 141. A device identifier of a terminal is used to uniquely indicate the terminal, and different terminals have different device identifiers. Optionally, the device identifier is an external device identifier or an internal device identifier. The external device identifier is a unique identifier outside the network. For example, the external device identifier is a generic public subscription identifier (generic public subscription identifier, GPSI), an external IP address, or the like. The internal device identifier is a unique identifier inside the network, for example, a subscriber permanent identifier (subscriber permanent identifier, SUPI), an international mobile subscriber identity (international mobile subscriber identity, IMSI), a globally unique temporary identity (globally unique temporary identity, GUTI), a 5G-GUTI, an international mobile equipment identity (international mobile equipment identity, IMEI), or the like. Optionally, the device information includes a device identifier of each of the at least one terminal. For example, if the at least one terminal includes a terminal 1, a terminal 2, and a terminal 3, the device information includes a device identifier of the terminal 1, a device identifier of the terminal 2, and a device identifier of the terminal 3.

In another example, the device information includes a set identifier of a terminal set, and the terminal set includes the target terminal 141 and at least one other terminal. A set identifier of a terminal set is used to uniquely indicate the terminal set, and different terminal sets have different set identifiers. For example, terminals 14 may be grouped according to a first preset rule, each group includes one or more terminals 14, a corresponding group identifier (group ID) is allocated to each group, and different groups have different group identifiers. For example, the terminals 14 are grouped based on cells, and terminals 14 belonging to a same cell are grouped into a same group. The foregoing set identifier may be a group identifier. For another example, the terminals 14 may be classified according to a second preset rule, and the target terminal 141 and the at least one other terminal belong to a same category. For example, the category is obtained based on at least one of the following: a function, an owner, and a location. The set identifier may be any one of a function identifier, an owner identifier, or a location identifier. The function identifier is used to indicate a service function of the terminal 14. Different service functions have different function identifiers. The service functions may include a smart switch service, a vehicle-mounted device service, a water meter service, an electricity meter service, and the like. The service functions may be classified based on an actual situation. This is not limited in the embodiments of this application. The owner identifier is used to indicate an owner identity of the terminal 14. Different owners have different owner identifiers. The owner identifier may be a user name, a phone number, or the like. This is not limited in the embodiments of this application. The location identifier is used to indicate a location of the terminal 14. Different locations have different location identifiers. The location identifier may be a tracking area identity (tracking area identity, TAI), a cell global identification (cell global identification, CGI), or the like. This is not limited in the embodiments of this application. Alternatively, the set identifier may be a combination of a plurality of identifiers in the group identifier, the function identifier, the owner identifier, and the location identifier. For example, the set identifier is a combination of a function identifier 2, an owner identifier A, and a location identifier 123. Assuming that the function identifier 2 corresponds to a water meter service, the owner identifier A corresponds to a user A, and the location identifier 123 corresponds to a tracking area whose TAI is 123, the foregoing set identifier indicates all water meter service devices belonging to the user A in the tracking area whose TAI is 123.

In still another example, the device information includes the device identifier of the target terminal 141, and the message further includes an applicable condition of the network access indication information. The applicable condition is used to indicate that the network access indication information is applicable to a terminal belonging to a same category as the target terminal 141. Similarly, the device identifier of the target terminal 141 may be an external device identifier of the target terminal 141, for example, a GPSI or an external IP address; or may be an internal device identifier of the target terminal 141, for example, an SUPI, an IMSI, a GUTI, a 5G-GUTI, or an IMEI. For example, the category may be obtained based on at least one of the following: a function, an owner, and a location. For descriptions of various categories, refer to the foregoing descriptions, and details are not described herein again. For example, when the category includes the function, it indicates that the network access indication information is applicable to all terminals that have a same service function as the target terminal 141. For another example, when the category includes the function and the owner, it indicates that the network access indication information is applicable to all terminals that have a same service function as the target terminal 141 and that belong to a same owner as the target terminal 141. For example, it is assumed that the device identifier of the target terminal 141 is 001, the target terminal 141 belongs to the user A in the tracking area whose TAI is 123, and a function of the target terminal 141 is the water meter service. If the network access indication information instruct to forbid to access the network, it indicates that all water meter service devices of the user A in the tracking area whose TAI is 123 are forbidden to access the network.

It should be noted that one message sent by the security function network element 11 to the storage function network element 12 may include one piece of device information, or may include at least two pieces of device information. Each piece of device information may be any one of the foregoing examples. For example, the message carries two pieces of device information, including a device identifier 001 and a set identifier 003, which respectively indicate a terminal whose device identifier is 001 and a terminal set whose set identifier is 003. In addition, each piece of device information may correspond to one piece of network access indication information. For example, the message includes the following three correspondences: 1. The first piece of device information (device identifier 001) corresponds to the first piece of network access indication information (indicating that a terminal whose device identifier is 001 is forbidden to access the network); 2. The second piece of device information (set identifier 003) corresponds to the second piece of network access indication information (indicating that a terminal set whose set identifier is 003 is forbidden to access the network); 3. The third piece of device information (device identifier 002) corresponds to the third piece of network access indication information (indicating that a terminal whose device identifier is 002 is allowed to access the network). Alternatively, two or more pieces of device information may correspond to one piece of network access indication information. For example, the message includes the following two correspondences: 1. The first piece of device information (device identifier 001) and the second piece of device information (set identifier 003) correspond to the first piece of network access indication information (indicating that a terminal whose device identifier is 001 and a terminal set whose set identifier is 003 are forbidden to access the network); 2. The third piece of device information (device identifier 002) corresponds to the second piece of network access indication information (indicating that a terminal whose device identifier is 002 is allowed to access the network).

Optionally, the security function network element 11 sends the message to an exposure function network element, and the exposure function network element forwards the message to the storage function network element 12. The exposure function network element is a function network element configured to enable a service and a capability of a 3GPP network. For example, in a 5G system, the exposure function network element may be a network exposure function (network exposure function, NEF) entity. In an LTE system, the exposure function network element may be a service capability exposure function (service capability exposure function, SCEF) entity.

Part 203: The storage function network element 12 updates network access permission information of the at least one terminal based on the device information and the network access indication information.

The network access permission information is used to indicate whether the at least one terminal is allowed to access the network. Optionally, the network access permission information includes first network access permission information and second network access permission information. The first network access permission information is used to indicate that the at least one terminal is allowed to access the network, and the second network access permission information is used to indicate that the at least one terminal is forbidden to access the network.

In an example, the device information includes the device identifier of the target terminal 141. The storage function network element 12 updates the network access permission information of the target terminal 141 based on the device identifier of the target terminal 141 and the network access indication information corresponding to the device identifier of the target terminal 141.

In another example, the device information includes the set identifier of the terminal set, and the terminal set includes the target terminal 141 and the at least one other terminal. The storage function network element 12 updates, based on the set identifier of the terminal set and the network access indication information corresponding to the set identifier of the terminal set, network access permission information of each terminal included in the terminal set.

In still another example, the device information includes the device identifier of the target terminal 141, and the message further includes the applicable condition of the network access indication information. The storage function network element 12 updates the network access permission information of the target terminal 141 based on the device identifier of the target terminal 141 and the network access indication information corresponding to the device identifier of the target terminal 141. In addition, the storage function network element 12 further determines, based on the device identifier of the target terminal 141 and the applicable condition of the network access indication information, another terminal applicable to the network access indication information, and updates the network access permission information of the another terminal.

Optionally, the storage function network element 12 stores context information of the at least one terminal, and the context information includes the network access permission information, for example, an access restriction (access restriction) parameter. The target terminal 141 is used as an example. When the network access indication information carried in the message indicates that the target terminal 141 is allowed to access the network, the storage function network element 12 updates the network access permission information of the target terminal 141 to indicate that the target terminal 141 is allowed to access the network. When the network access indication information carried in the message indicates that the target terminal 141 is forbidden to access the network, the storage function network element 12 updates the network access permission information of the target terminal 141 to indicate that the target terminal 141 is forbidden to access the network.

Optionally, if the target terminal 141 has currently accessed the network, when the target terminal 141 is forbidden to access the network, the storage function network element 12 initiates a deregistration procedure, to instruct a mobility management network element to deregister or detach the target terminal 141. The mobility management network element is a function network element responsible for access authentication and mobility management. For example, in a 5G system, the mobility management network element may be an access and mobility management function (access and mobility management function, AMF) entity. In an LTE system, the mobility management network element may be a mobility management entity (mobility management entity, MME). For example, the foregoing deregistration procedure is as follows: The storage function network element 12 sends a notification to the mobility management network element, the notification is used to instruct the mobility management network element to deregister or detach the target terminal 141, and the deregistration and detachment includes removing a registration management context and a protocol data unit (protocol data unit, PDU) session of the target terminal 141. Optionally, the foregoing notification carries the device identifier (for example, an SUPI) of the target terminal 141 and a deregistration cause value. The deregistration cause value is used to indicate a deregistration cause, for example, a network side rejects the deregistration, or a security problem occurs. After receiving the notification, the mobility management network element sends a deregistration request to the target terminal 141, deletes the PDU session established for the target terminal 141, and deletes the management policy for the target terminal 141. After receiving the deregistration request, the target terminal 141 releases a connection between the target terminal 141 and the access network device. Optionally, the mobility management network element sends the deregistration cause value to the target terminal 141, so that the target terminal 141 obtains the deregistration cause based on the deregistration cause value, and subsequently, may determine, based on the deregistration cause, whether to re-access the network or determine waiting duration for re-accessing the network.

In addition, if the target terminal 141 currently does not access the network, and the target terminal 141 is forbidden to access the network, when the target terminal 141 sends a registration request or an attachment request to the mobility management network element, the mobility management network element requests the storage function network element 12 to authenticate the target terminal 141, the storage function network element 12 feeds back a result of forbidding the target terminal 141 to access the network to the mobility management network element, and after receiving the foregoing result, the mobility management network element rejects the registration request or the attachment request of the target terminal 141. If the target terminal 141 currently does not access the network, and the target terminal 141 is allowed to access the network, when the target terminal 141 sends a registration request or an attachment request to the mobility management network element, the mobility management network element requests the storage function network element 12 to authenticate the target terminal 141, the storage function network element 12 feeds back a result of allowing the target terminal 141 to access the network to the mobility management network element, and after receiving the foregoing result, the mobility management network element responds to the registration request or the attachment request of the target terminal 141, so that the target terminal 141 accesses the network. If the target terminal 141 has currently accessed the network, when the target terminal 141 is allowed to access the network, the foregoing access state is maintained.

Optionally, the storage function network element 12 sends a response message to the security function network element 11 after updating the network access permission information of the at least one terminal or after completing a related operation procedure of forbidding or allowing the at least one terminal to access the network.

It should be additionally noted that, if the device identifier carried in the message sent by the security function network element 11 is the external device identifier, identity mapping needs to be performed to map the external device identifier to the internal device identifier. In a possible manner, the exposure function network element performs the identity mapping. The message sent by the security function network element 11 to the exposure function network element carries the external device identifier. After mapping the external device identifier to the internal device identifier, the exposure function network element sends the processed message to the storage function network element 12. In another possible manner, the policy function network element performs identity mapping. The policy function network element is a function network element configured to manage a policy of a control plane function entity, for example, a policy control function (policy control function, PCF) entity in a 5G system or a policy and charging enforcement function (policy and charging enforcement function, PCEF) entity in an LTE system. The message sent by the security function network element 11 to the exposure function network element carries the external device identifier. The exposure function network element forwards the message to the policy function network element. After mapping the external device identifier to the internal device identifier, the exposure function network element sends the processed message to the storage function network element 12. In still another possible manner, the storage function network element 12 performs the identity mapping. After receiving the message carrying the external device identifier, the storage function network element 12 maps the external device identifier to the internal device identifier.

In the solutions provided in this embodiment of this application, the security function network element 11 detects whether the terminal is exposed to the security threat, and sends the message to the storage function network element 12 based on the detection result, to indicate, to the storage function network element 12, that one or more terminals are allowed or forbidden to access a network, so that flexible, real-time and automatic control of access of the terminal to the network is implemented on the network side.

In addition, the security function network element 11 can flexibly allow or forbid, based on a terminal granularity or a terminal set granularity, access of the terminal to the network. Optionally, the security function network element 11 can flexibly allow or forbid, based on a granularity such as the function, the owner, or the location, a plurality of terminals to access the network.

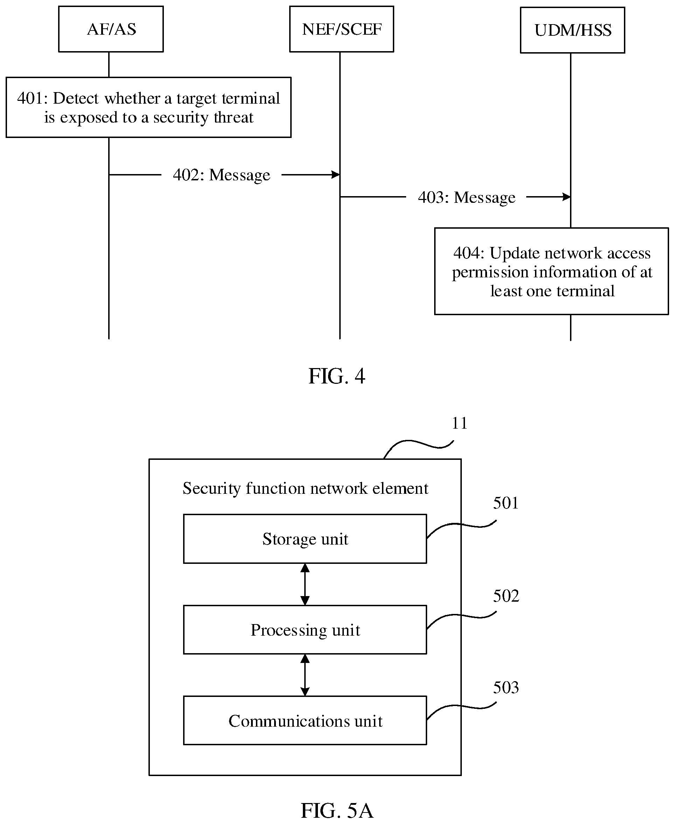

Based on the method shown in FIG. 2, the following further describes the solutions in the embodiments of this application with reference to FIG. 3 and FIG. 4. In the methods shown in FIG. 3 and FIG. 4, for content that is the same as or similar to that in the method shown in FIG. 2, refer to the detailed descriptions in the embodiment in FIG. 2. Details are not described again subsequently.

FIG. 3 is a schematic communication diagram of a method for controlling access of a terminal to a network according to another embodiment of this application. In FIG. 3, an example in which an application scenario is a 5G system, the security function network element 11 is an NWDAF, and the storage function network element 12 is a UDM is used for description. The method may include the following parts 301 to 303.

Part 301: The NWDAF detects whether the target terminal 141 is exposed to a security threat.

Part 302: The NWDAF sends a message to the UDM based on a detection result.

Specifically, the message includes device information and network access indication information. The device information is used to indicate at least one terminal including the target terminal 141, and the network access indication information is used to indicate that the at least one terminal is allowed or forbidden to access a network.

Part 303: The UDM updates network access permission information of the at least one terminal based on the device information and the network access indication information.

Optionally, if the target terminal 141 has currently accessed the network, when the target terminal 141 is forbidden to access the network, the UDM initiates a deregistration procedure, to instruct an AMF to deregister the target terminal 141.

FIG. 4 is a schematic communication diagram of a method for controlling access of a terminal to a network according to still another embodiment of this application. In FIG. 4, an example in which an application scenario is a 5G system, the security function network element 11 is an AF, and the storage function network element 12 is a UDM is used for description, or an example in which an application scenario is an LTE system, the security function network element 11 is an AS, and the storage function network element 12 is an HSS is used for description. The method may include the following parts 401 to 404.

Part 401: The AF/AS detects whether the target terminal 141 is exposed to a security threat.

Part 402: The AF/AS sends a message to the NEF/SCEF based on a detection result.

Specifically, the message includes device information and network access indication information. The device information is used to indicate at least one terminal including the target terminal 141, and the network access indication information is used to indicate that the at least one terminal is allowed or forbidden to access a network.

Part 403: The NEF/SCEF sends the message to the UDM/HSS.

Optionally, when the message carries an external device identifier, the NEF/SCEF may map the external device identifier to an internal device identifier, and then the NEF/SCEF sends the processed message to the UDM/HSS. Alternatively, the NEF/SCEF may send the message to the PCF/PCEF, the PCF/PCEF maps the external device identifier to the internal device identifier, and then the PCF/PCEF sends the processed message to the UDM/HSS. Alternatively, the NEF/SCEF sends the message to the UDM/HSS, and subsequently, the UDM/HSS maps the external device identifier carried in the message to the internal device identifier.

Part 404: The UDM/HSS updates network access permission information of the at least one terminal based on the device information and the network access indication information.

Optionally, if the target terminal 141 has currently accessed the network, when the target terminal 141 is forbidden to access the network, the UDM/HSS initiates a deregistration procedure, to instruct an AMF/MME to deregister or detach the target terminal 141.

Based on the methods shown in FIG. 2 to FIG. 4, in another example embodiment provided in this application, the storage function network element 12 obtains valid duration of the network access indication information, and the valid duration is used to indicate a time in which the network access indication information is valid. The valid duration may be generated by the storage function network element 12, or may be generated by another network element and sent to the storage function network element 12, for example, generated by the security function network element 11, a policy function network element, or an exposure function network element. For example, the security function network element 11 generates the valid duration of the network access indication information. Optionally, the message sent by the security function network element 11 to the storage function network element 12 further includes the valid duration. In this embodiment of this application, a manner in which each network element generates the valid duration is not limited. For example, the network element may use a preset fixed value as the valid duration, or the network element may dynamically generate the valid duration based on a predefined policy, for example, dynamically determine a value of the valid duration based on a degree or harm of a security threat to the terminal. After obtaining the valid duration of the network access indication information, the storage function network element 12 starts a timer, and timing duration of the timer is the valid duration. When the timer expires, the network access indication information is invalid, and the storage function network element 12 may restore the network access permission information of the at least one terminal to a state or a predefined state before the update.

In another possible implementation, after obtaining the valid duration of the network access indication information, the storage function network element 12 records a current time stamp and the valid duration. Alternatively, an invalid time stamp of the network access indication information is calculated based on the current time stamp and the valid duration, and the invalid time stamp is recorded. The storage function network element 12 can also determine, based on the foregoing recorded information, whether the network access indication information is invalid. In this manner, no timer needs to be configured or maintained, which helps reduce processing overheads of the storage function network element 12.

The valid duration of the network access indication information is set, to avoid that a terminal or some terminals are not served because of being forbidden to access a network for a long time, or avoid that a terminal or some terminals occupy network resources unnecessarily because of being allowed to access a network for a long time.

Based on the methods shown in FIG. 2 to FIG. 4, in another example embodiment provided in this application, the message sent by the security function network element 11 to the storage function network element 12 further includes exception indication information. Specifically, the exception indication information is used to indicate one or at least two terminals that belong to the at least one terminal and to which the network access indication information is not applicable. The one or at least two terminals may be indicated by using a device identifier, or may be indicated by using a set identifier, for example, indicated by using any one or a combination of a group identifier, a function identifier, an owner identifier, and a location identifier. For example, the device information carried in the message is a set identifier 005, the network access indication information is used to indicate that a terminal set whose set identifier is 005 is forbidden to access a network. The message further carries the exception indication information, and the exception indication information includes device identifiers 010 and 011, indicating that two terminals whose device identifiers are 010 and 011 in the terminal set whose set identifier is 005 are allowed to access the network. After receiving the foregoing message, the storage function network element 12 forbids a terminal in the terminal set whose set identifier is 005 other than the two terminals whose device identifiers are 010 and 011 to access the network.

An exception option is provided by carrying the exception indication information in the message, so that control of access of the terminal to the network is more flexible.

The foregoing mainly describes the solutions provided in this embodiment of this application from a perspective of interaction between the security function network element 11 and the storage function network element 12. It may be understood that, to implement the foregoing functions, the security function network element 11 and the storage function network element 12 include corresponding hardware structures and/or software modules for performing the functions. With reference to the units and algorithm steps described in this embodiment disclosed in this application, this embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in this embodiment of this application.

In this embodiment of this application, the security function network element 11 or the storage function network element 12 may be divided into function units based on the foregoing method examples. For example, each function unit may be obtained through division based on each corresponding function, or two or more functions may be integrated into one processing unit. The integrated unit may be implemented in a form of hardware, or may be implemented in a form of a software function unit. It should be noted that, in this embodiment of this application, unit division is an example, and is merely a logical function division. During actual implementation, another division manner may be used.

When an integrated unit is used, FIG. 5A is a possible schematic structural diagram of the security function network element 11 in the foregoing embodiments. The security function network element 11 includes a processing unit 502 and a communications unit 503. The processing unit 502 is configured to control and manage an action of the security function network element 11. For example, the processing unit 502 is configured to support the security function network element 11 in performing the process 201 in FIG. 2, the process 301 in FIG. 3, and the process 401 in FIG. 4, and/or is configured to perform another process of the technology described in this specification. The communications unit 503 is configured to support the security function network element 11 in communicating with the storage function network element 12 or another network entity. For example, the communications unit 503 is configured to support the security function network element 11 in performing the process 202 in FIG. 2, the process 302 in FIG. 3, and the process 402 in FIG. 4, and/or is configured to perform another related communication process described in this specification. The security function network element 11 may further include a storage unit 501, configured to store program code and data of the security function network element 11.

The processing unit 502 may be a processor or a controller, such as may be a central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA), or another programmable logical device, a transistor logical device, a hardware component, or any combination thereof. The processor may implement or execute various example logical blocks, modules, and circuits described with reference to content disclosed in this application. Alternatively, the processor may be a combination implementing a computing function, for example, a combination of one or more microprocessors, or a combination of the DSP and a microprocessor. The communications unit 503 may be a communications interface, a transceiver, a transceiver circuit, or the like. The communications interface is a general term, and may include one or more interfaces, for example, an interface between the security function network element 11 and the storage function network element 12. The storage unit 501 may be a memory.

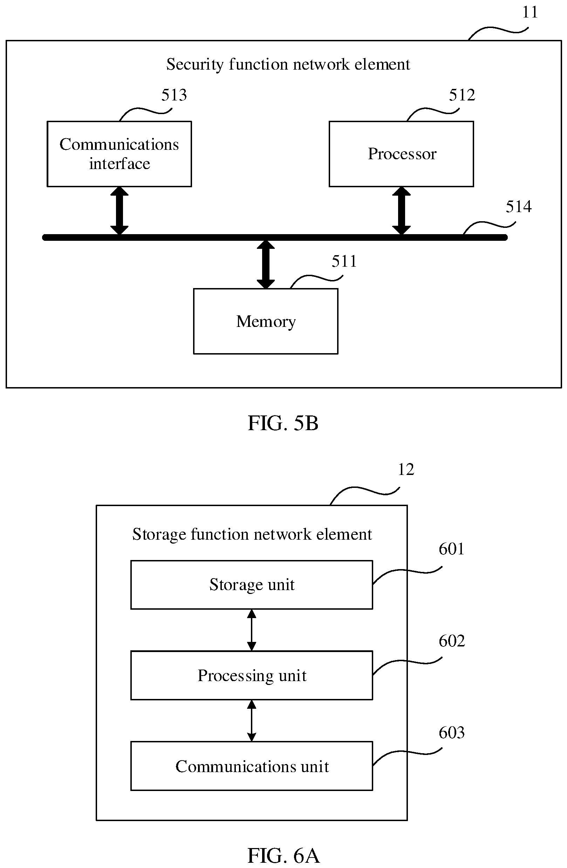

When the processing unit 502 is a processor, the communications unit 503 is a communications interface, and the storage unit 501 is a memory, the security function network element 11 in this embodiment of this application may be the security function network element 11 shown in FIG. 5B.

Referring to FIG. 5B, the security function network element 11 includes a processor 512, a communications interface 513, and a memory 511. Optionally, the security function network element 11 may further include a bus 514. The communications interface 513, the processor 512, and the memory 511 may be connected to each other by using the bus 514. The bus 514 may be a peripheral component interconnect (peripheral component interconnect, PCI) bus, an extended industry standard architecture (extended industry standard architecture, EISA) bus, or the like. The bus 514 may be classified into an address bus, a data bus, a control bus, and the like. For ease of representation, only one thick line is used to represent the bus in FIG. 5B, but this does not mean that there is only one bus or only one type of bus.

The security function network element 11 shown in FIG. 5A or FIG. 5B may be an NWDAF, an AF, an AS, or another network entity.

When an integrated unit is used, FIG. 6A is a possible schematic structural diagram of the storage function network element 12 in the foregoing embodiments. The storage function network element 12 includes a processing unit 602 and a communications unit 603. The processing unit 602 is configured to control and manage an action of the storage function network element 12. For example, the processing unit 602 is configured to support the storage function network element 12 in performing the process 203 in FIG. 2, the process 303 in FIG. 3, and the process 404 in FIG. 4, and/or is configured to perform another process of the technology described in this specification. The communications unit 603 is configured to support the storage function network element 12 in communicating with the security function network element 11 or another network entity. For example, the communications unit 603 is configured to support the storage function network element 12 in performing the process 403 in FIG. 4, and/or is configured to perform another related communication process described in this specification. The storage function network element 12 may further include a storage unit 601, configured to store program code and data of the storage function network element 12.

The processing unit 602 may be a processor or a controller, such as may be a CPU, a general-purpose processor, a DSP, an ASIC, an FPGA, or another programmable logic device, a transistor logic device, a hardware component, or any combination thereof. The processor may implement or execute various example logical blocks, modules, and circuits described with reference to content disclosed in this application. Alternatively, the processor may be a combination implementing a computing function, for example, a combination of one or more microprocessors, or a combination of the DSP and a microprocessor. The communications unit 603 may be a communications interface, a transceiver, a transceiver circuit, or the like. The communications interface is a general term, and may include one or more interfaces, for example, an interface between the storage function network element 12 and the security function network element 11. The storage unit 601 may be a memory.

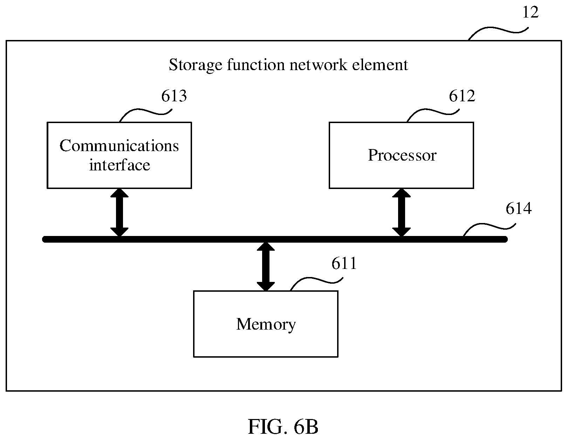

When the processing unit 602 is a processor, the communications unit 603 is a communications interface, and the storage unit 601 is a memory, the storage function network element 12 in this embodiment of this application may be the storage function network element 12 shown in FIG. 6B.

Referring to FIG. 6B, the storage function network element 12 includes a processor 612, a communications interface 613, and a memory 611. Optionally, the storage function network element 12 may further include a bus 614. The communications interface 613, the processor 612, and the memory 611 may be connected to each other by using the bus 614. The bus 614 may be a PCI bus, an EISA bus, or the like. The bus 614 may be classified into an address bus, a data bus, a control bus, and the like. For ease of representation, only one thick line is used to represent the bus in FIG. 6B, but this does not mean that there is only one bus or only one type of bus.

The storage function network element 12 shown in FIG. 6A or FIG. 6B may be a UDM, an HSS, or another network entity.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (random access memory, RAM), a flash memory, a read-only memory (read only memory, ROM), an erasable programmable read only memory (erasable programmable ROM, EPROM), an electrically erasable programmable read only memory (electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in the security function network element 11 or the storage function network element 12. Certainly, the processor and the storage medium may exist in the security function network element 11 or the storage function network element 12 as discrete components.

A person skilled in the art should be aware that in the foregoing one or more examples, functions described in the embodiments of this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

## Claims

1. A method for controlling access of a terminal to a network, wherein the method comprises:
detecting (201), by a network data analysis function (11), whether a target terminal is exposed to a security threat; and
sending (202), by the network data analysis function (11), a message to a storage function network element (12) based on a detection result, wherein the message comprises device information and network access indication information, the device information comprises a set identifier of a terminal set, and the terminal set comprises the target terminal and at least one other terminal, and the device information is used to indicate at least one terminal (14) comprising the target terminal, and the network access indication information is used to instruct to allow or forbid the at least one terminal (14) to access a network.

2. The method according to claim 1, wherein the message further comprises an applicable condition of the network access indication information, and the applicable condition is used to indicate that the network access indication information is applicable to another terminal belonging to a same category as the target terminal.

3. The method according to claim 1 or 2, wherein the device information comprises a device identifier of the target terminal, and the device identifier is an external device identifier or an internal device identifier, the external device identifier is a unique identifier outside the network, and the internal device identifier is a unique identifier inside the network.

4. The method according to any one of claims 1 to 3, wherein the message further comprises valid duration of the network access indication information.

5. The method according to any one of claims 1 to 4, wherein the detecting, by a network data analysis function (11), whether a target terminal is exposed to a security threat comprises:
obtaining, by the network data analysis function (11), information about user plane data of the target terminal; and
determining, by the network data analysis function (11) based on the information, whether the target terminal is exposed to the security threat.

6. The method according to any one of claims 1 to 5, wherein the set identifier comprises any one of a function identifier, an owner identifier, or a location identifier; wherein the function identifier is used to indicate a service function of the terminal set; the owner identifier is used to indicate an owner identity of the terminal set; and the location identifier is used to indicate a location of the terminal set.

7. The method according to claim 6, wherein the service function comprises a smart switch service, a vehicle-mounted device service, a water meter service, or an electricity meter service.

8. The method according to claim 6, wherein the location identifier comprises a tracking area identity or a cell global identification.

9. A method for controlling access of a terminal to a network, wherein the method comprises:
receiving (202), by a storage function network element (12), a message from a network data analysis function (11), wherein the message comprises device information and network access indication information, the device information comprises a set identifier of a terminal set, and the terminal set comprises the target terminal and at least one other terminal, and the device information is used to indicate at least one terminal (14) comprising a target terminal, and the network access indication information is used to indicate that the at least one terminal (14) is allowed or forbidden to access a network; and
updating (203), by the storage function network element (12), network access permission information of the at least one terminal (14) based on the device information and the network access indication information, wherein the network access permission information is used to indicate whether the at least one terminal (14) is allowed to access the network.

10. The method according to claim 9, wherein the message further comprises an applicable condition of the network access indication information, and the applicable condition is used to indicate that the network access indication information is applicable to another terminal belonging to a same category as the target terminal.

11. The method according to claim 10, wherein the device information comprises a device identifier of the target terminal, the method further comprises:
determining, by the storage function network element based on the device identifier of the target terminal and the applicable condition of the network access indication information, another terminal applicable to the network access indication information; and
updating, by the storage function network element, network access permission information of the another terminal.

12. The method according to any one of claims 9 to 11, wherein the device information comprises a device identifier of the target terminal, the device identifier is an external device identifier or an internal device identifier, the external device identifier is a unique identifier outside the network, and the internal device identifier is a unique identifier inside the network.

13. The method according to any one of claims 9 to 12, wherein the method further comprises:
obtaining, by the storage function network element (12), valid duration of the network access indication information; and
starting, by the storage function network element (12), a timer, wherein timing duration of the timer is the valid duration; or recording, by the storage function network element (12), a current time stamp and the valid duration; or calculating, by the storage function network element (12), an invalid time stamp of the network access indication information based on the current time stamp and the valid duration, and recording the invalid time stamp.

14. The method according to any one of claims 9 to 13, wherein the message further comprises exception indication information, and the exception indication information is used to indicate one or at least two terminals that belong to the at least one terminal (14) and to which the network access indication information is not applicable.

15. A network element, comprising means for carrying out the steps of the method according to any one of claims 1 to 14.

16. A computer readable storage medium, comprising instructions which, when executed by a computer, cause the computer to carry out the steps of any one of the method claims 1 to 14.

## Patentansprüche

1. Verfahren zum Steuern des Zugriffs eines Endgeräts auf ein Netzwerk, wobei das Verfahren umfasst:
Erkennen (201) durch eine Netzwerkdatenanalysefunktion (11), ob ein Zielendgerät einer Sicherheitsbedrohung ausgesetzt ist; und
Senden (202) einer Nachricht an ein Speicherfunktionsnetzwerkelement (12) durch die Netzwerkdatenanalysefunktion (11) basierend auf einem Erkennungsergebnis, wobei die Nachricht Vorrichtungsinformationen und Netzwerkzugriffsangabeinformationen umfasst, die Vorrichtungsinformationen eine Satzkennung eines Endgerätesatzes umfassen und der Endgerätesatz das Zielendgerät und mindestens ein anderes Endgerät umfasst, und die Vorrichtungsinformationen dazu verwendet werden, mindestens ein Endgerät (14) anzugeben, das das Zielendgerät umfasst, und die Netzwerkzugriffsangabeinformationen zum Anweisen verwendet werden, dem mindestens einen Endgerät (14) den Zugriff auf ein Netzwerk zu erlauben oder zu verbieten.

2. Verfahren gemäß Anspruch 1, wobei die Nachricht ferner eine Anwendbarkeitsbedingung der Netzwerkzugriffsangabeinformationen umfasst und die Anwendbarkeitsbedingung zur Angabe verwendet wird, dass die Netzwerkzugriffsangabeinformationen auf ein anderes Endgerät anwendbar sind, das zu einer gleichen Kategorie wie das Zielendgerät gehört.

3. Verfahren gemäß Anspruch 1 oder 2, wobei die Vorrichtungsinformationen eine Vorrichtungskennung des Zielendgeräts umfasst und die Vorrichtungskennung eine externe Vorrichtungskennung oder eine interne Vorrichtungskennung ist, wobei die externe Vorrichtungskennung eine eindeutige Kennung außerhalb des Netzwerks ist und die interne Vorrichtungskennung eine eindeutige Kennung innerhalb des Netzwerks ist.

4. Verfahren gemäß einem der Ansprüche 1 bis 3, wobei die Nachricht ferner die Gültigkeitsdauer der Netzwerkzugriffsangabeinformationen umfasst.

5. Verfahren gemäß einem der Ansprüche 1 bis 4, wobei das Erkennen, ob ein Zielendgerät einer Sicherheitsbedrohung ausgesetzt ist, durch eine Netzwerkdatenanalysefunktion (11) umfasst:
Ermitteln von Informationen über Benutzerebenendaten des Zielendgeräts durch die Netzwerkdatenanalysefunktion (11); und
Bestimmen durch die Netzwerkdatenanalysefunktion (11) basierend auf den Informationen, ob das Zielendgerät der Sicherheitsbedrohung ausgesetzt ist.

6. Verfahren gemäß einem der Ansprüche 1 bis 5, wobei die Satzkennung eine Funktionskennung, eine Eigentümerkennung oder eine Standortkennung umfasst; wobei die Funktionskennung dazu verwendet wird, eine Dienstfunktion des Endgerätesatzes anzugeben; die Eigentümerkennung dazu verwendet wird, eine Eigentümeridentität des Endgerätesatzes anzugeben; und die Standortkennung dazu verwendet wird, einen Standort des Endgerätesatzes anzugeben.

7. Verfahren gemäß Anspruch 6, wobei die Dienstfunktion einen intelligenten Schalterdienst, einen Fahrzeugvorrichtungsdienst, einen Wasserzählerdienst oder einen Stromzählerdienst umfasst.

8. Verfahren gemäß Anspruch 6, wobei die Standortkennung eine Nachverfolgungsbereichsidentität oder eine globale Zellenidentifikation umfasst.

9. Verfahren zum Steuern des Zugriffs eines Endgeräts auf ein Netzwerk, wobei das Verfahren umfasst:
Empfangen (202) einer Nachricht aus einer Netzwerkdatenanalysefunktion (11) durch ein Speicherfunktionsnetzwerkelement (12), wobei die Nachricht Vorrichtungsinformationen und Netzwerkzugriffsangabeinformationen umfasst, die Vorrichtungsinformationen eine Satzkennung eines Endgerätesatzes umfassen und der Endgerätesatz das Zielendgerät und mindestens ein anderes Endgerät umfasst, und die Vorrichtungsinformationen dazu verwendet werden, mindestens ein Endgerät (14) anzugeben, das ein Zielendgerät umfasst, und die Netzwerkzugriffsangabeinformationen zur Angabe verwendet werden, ob dem mindestens einen Endgerät (14) der Zugriff auf ein Netzwerk erlaubt oder verboten ist; und
Aktualisieren (203) von Netzwerkzugriffserlaubnisinformationen des mindestens einen Endgeräts (14) basierend auf den Vorrichtungsinformationen und den Netzwerkzugriffsangabeinformationen durch das Speicherfunktionsnetzwerkelement (12), wobei die Netzwerkzugriffserlaubnisinformationen zur Angabe verwendet werden, ob dem mindestens einen Endgerät (14) der Zugriff auf das Netzwerk erlaubt ist.

10. Verfahren gemäß Anspruch 9, wobei die Nachricht ferner eine Anwendbarkeitsbedingung der Netzwerkzugriffsangabeinformationen umfasst und die Anwendbarkeitsbedingung zur Angabe verwendet wird, dass die Netzwerkzugriffsangabeinformationen auf ein anderes Endgerät anwendbar sind, das zu einer gleichen Kategorie wie das Zielendgerät gehört.

11. Verfahren gemäß Anspruch 10, wobei die Vorrichtungsinformationen eine Vorrichtungskennung des Zielendgeräts umfassen, wobei das Verfahren ferner umfasst:
Bestimmen eines anderen Endgeräts, das auf die Netzwerkzugriffsangabeinformationen zutrifft, durch das Speicherfunktionsnetzwerkelement basierend auf der Vorrichtungskennung des Zielendgeräts und der Anwendbarkeitsbedingung der Netzwerkzugriffsangabeinformationen; und
Aktualisieren der Netzwerkzugriffserlaubnisinformationen des anderen Endgeräts durch das Speicherfunktionsnetzwerkelement.

12. Verfahren gemäß einem der Ansprüche 9 bis 11, wobei die Vorrichtungsinformationen eine Vorrichtungskennung des Zielendgeräts umfassen, die Vorrichtungskennung eine externe Vorrichtungskennung oder eine interne Vorrichtungskennung ist, die externe Vorrichtungskennung eine eindeutige Kennung außerhalb des Netzwerks ist und die interne Vorrichtungskennung eine eindeutige Kennung innerhalb des Netzwerks ist.

13. Verfahren gemäß einem der Ansprüche 9 bis 12, wobei das Verfahren ferner umfasst:
Ermitteln der Gültigkeitsdauer der Netzwerkzugriffsangabeinformationen durch das Speicherfunktionsnetzwerkelement (12); und
Starten eines Zeitgebers durch das Speicherfunktionsnetzwerkelement (12), wobei die Zeitdauer des Zeitgebers die Gültigkeitsdauer ist; oder Aufzeichnen eines aktuellen Zeitstempels und der Gültigkeitsdauer durch das Speicherfunktionsnetzwerkelement (12); oder Berechnen eines Ungültigkeitszeitstempels der Netzwerkzugriffsangabeinformationen basierend auf dem aktuellen Zeitstempel und der Gültigkeitsdauer durch das Speicherfunktionsnetzwerkelement (12) und Aufzeichnen des Ungültigkeitszeitstempels.

14. Verfahren gemäß einem der Ansprüche 9 bis 13, wobei die Nachricht ferner Ausnahmeangabeinformationen umfasst und die Ausnahmeangabeinformationen dazu verwendet werden, ein oder mindestens zwei Endgeräte anzugeben, die zu dem mindestens einen Endgerät (14) gehören und auf die die Netzwerkzugriffsangabeinformationen nicht anwendbar sind.

15. Netzwerkelement, das Mittel zum Ausführen der Schritte des Verfahrens gemäß einem der Ansprüche 1 bis 14 umfasst.

16. Computerlesbares Speichermedium, umfassend Anweisungen, die beim Ausführen durch einen Computer den Computer veranlassen, die Schritte gemäß einem der Verfahrensansprüche 1 bis 14 durchzuführen.

## Revendications

1. Procédé pour contrôler l'accès d'un terminal à un réseau, dans lequel le procédé comprend de :
détecter (201), par une fonction d'analyse de données de réseau (11), si un terminal cible est exposé à une menace de sécurité ; et
envoyer (202), par la fonction d'analyse de données de réseau (11), un message à un élément de réseau à fonction de stockage (12) sur la base d'un résultat de détection, dans lequel le message comprend des informations de dispositif et des informations d'indication d'accès au réseau, les informations de dispositif comprenant un identificateur d'ensemble d'un ensemble de terminaux, et l'ensemble de terminaux comprend le terminal cible et au moins un autre terminal, et les informations de dispositif sont utilisées pour indiquer au moins un terminal (14) comprenant le terminal cible, et les informations d'indication d'accès au réseau sont utilisées pour ordonner d'autoriser ou d'interdire à l'au moins un terminal (14) d'accéder à un réseau.

2. Procédé selon la revendication 1, dans lequel le message comprend en outre une condition applicable des informations d'indication d'accès au réseau, et la condition applicable est utilisée pour indiquer que les informations d'indication d'accès au réseau sont applicables à un autre terminal appartenant à une même catégorie que le terminal cible.

3. Procédé selon la revendication 1 ou 2, dans lequel les informations de dispositif comprennent un identificateur de dispositif du terminal cible, et l'identificateur de dispositif est un identificateur de dispositif externe ou un identificateur de dispositif interne, l'identificateur de dispositif externe est un identificateur unique à l'extérieur du réseau, et l'identificateur de dispositif interne est un identificateur unique à l'intérieur du réseau.

4. Procédé selon l'une quelconque des revendications 1 à 3, dans lequel le message comprend en outre une durée valide des informations d'indication d'accès au réseau.

5. Procédé selon l'une quelconque des revendications 1 à 4, dans lequel la détection, par une fonction d'analyse de données réseau (11), du fait qu'un terminal cible est exposé à une menace de sécurité comprend de :
obtenir, par la fonction d'analyse de données de réseau (11), des informations sur des données de plan utilisateur du terminal cible ; et
déterminer, par la fonction d'analyse de données de réseau (11) sur la base des informations, si le terminal cible est exposé à la menace de sécurité.

6. Procédé selon l'une quelconque des revendications 1 à 5, dans lequel l'identificateur d'ensemble comprend l'un quelconque d'un identificateur de fonction, d'un identificateur de propriétaire, ou d'un identificateur de localisation ; dans lequel l'identificateur de fonction est utilisé pour indiquer une fonction de service de l'ensemble de terminaux ; l'identificateur de propriétaire est utilisé pour indiquer une identité de propriétaire de l'ensemble de terminaux ; et l'identificateur de localisation est utilisé pour indiquer une localisation de l'ensemble de terminaux.

7. Procédé selon la revendication 6, dans lequel la fonction de service comprend un service de commutateur intelligent, un service de dispositif monté sur véhicule, un service de compteur d'eau, ou un service de compteur électrique.

8. Procédé selon la revendication 6, dans lequel l'identificateur de localisation comprend une identité de zone de suivi ou une identification globale de cellule.

9. Procédé pour contrôler l'accès d'un terminal à un réseau, dans lequel le procédé comprend de :
recevoir (202), par un élément de réseau à fonction de stockage (12), un message à partir d'une fonction d'analyse de données de réseau (11), dans lequel le message comprend des informations de dispositif et des informations d'indication d'accès au réseau, les informations de dispositif comprennent un identificateur d'ensemble d'un ensemble de terminaux, et l'ensemble de terminaux comprend le terminal cible et au moins un autre terminal, et les informations de dispositif sont utilisées pour indiquer au moins un terminal (14) comprenant un terminal cible, et les informations d'indication d'accès au réseau sont utilisées pour indiquer que l'au moins un terminal (14) est autorisé à accéder ou a l'interdiction d'accéder à un réseau ; et
mettre à jour (203), par l'élément de réseau à fonction de stockage (12), des informations d'autorisation d'accès au réseau dudit au moins un terminal (14) sur la base des informations de dispositif et des informations d'indication d'accès au réseau, dans lequel les informations d'autorisation d'accès au réseau sont utilisées pour indiquer si l'au moins un terminal (14) est autorisé à accéder au réseau.

10. Procédé selon la revendication 9, dans lequel le message comprend en outre une condition applicable des informations d'indication d'accès au réseau, et la condition applicable est utilisée pour indiquer que les informations d'indication d'accès au réseau sont applicables à un autre terminal appartenant à une même catégorie que le terminal cible.

11. Procédé selon la revendication 10, dans lequel les informations de dispositif comprennent un identificateur de dispositif du terminal cible, le procédé comprenant en outre de :
déterminer, par l'élément de réseau à fonction de stockage sur la base de l'identificateur de dispositif du terminal cible et de la condition applicable des informations d'indication d'accès au réseau, un autre terminal applicable aux informations d'indication d'accès au réseau ; et
mettre à jour, par l'élément de réseau à fonction de stockage, les informations d'autorisation d'accès au réseau de l'autre terminal.

12. Procédé selon l'une quelconque des revendications 9 à 11, dans lequel les informations de dispositif comprennent un identificateur de dispositif du terminal cible, l'identificateur de dispositif est un identificateur de dispositif externe ou un identificateur de dispositif interne, l'identificateur de dispositif externe est un identificateur unique à l'extérieur du réseau, et l'identificateur de dispositif interne est un identificateur unique à l'intérieur du réseau.

13. Procédé selon l'une quelconque des revendications 9 à 12, dans lequel le procédé comprend en outre de :
obtenir, par l'élément de réseau à fonction de stockage (12), une durée valide des informations d'indication d'accès au réseau ; et
démarrer, par l'élément de réseau à fonction de stockage (12), un temporisateur, dans lequel la durée de temporisation du temporisateur est la durée valide ; ou enregistrer, par l'élément de réseau à fonction de stockage (12), un horodatage actuel et la durée valide ; ou calculer, par l'élément de réseau à fonction de stockage (12), un horodatage invalide des informations d'indication d'accès au réseau sur la base de l'horodatage actuel et de la durée valide, et enregistrer l'horodatage invalide.

14. Procédé selon l'une quelconque des revendications 9 à 13, dans lequel le message comprend en outre des informations d'indication d'exception, et les informations d'indication d'exception sont utilisées pour indiquer un ou au moins deux terminaux qui appartiennent à l'au moins un terminal (14) et auxquels les informations d'indication d'accès au réseau ne sont pas applicables.

15. Élément de réseau, comprenant des moyens pour mettre en oeuvre les étapes du procédé selon l'une quelconque des revendications 1 à 14.

16. Support de stockage lisible par ordinateur, comprenant des instructions qui, lorsqu'elles sont exécutées par un ordinateur, amènent l'ordinateur à exécuter les étapes de l'une quelconque des revendications de procédé 1 à 14.
